Europäisches Patentamt

European Patent Office

Office européen des brevets

(19)

(11) Veröffentlichungsnummer: **0 058 450**

**A1**

(12) **EUROPÄISCHE PATENTANMELDUNG**

(21) Anmeldenummer: **82200129.3**

(22) Anmeldetag: **10.02.82**

(51) Int. Cl.$^3$: **B 23 K 35/30**
//C22C38/02

(30) Priorität: **11.02.81 DE 3104831**

(43) Veröffentlichungstag der Anmeldung:
**25.08.82 Patentblatt 82/34**

(84) Benannte Vertragsstaaten:
**CH DE FR GB IT LI NL SE**

(71) Anmelder: **Mühlberger, Horst Dr.**
**Staufenstrasse 29**
**D-6000 Frankfurt/Main(DE)**

(72) Erfinder: **Mühlberger, Horst Dr.**
**Staufenstrasse 29**
**D-6000 Frankfurt/Main(DE)**

(54) **Legierung auf Eisenbasis für die Verwendung beim Verbindungsschweissen von Bauteilen aus Gusseisen mit Kugel-Graphit.**

(57) Zur Herstellung von Schweißungen an Werkstücken, die wenigstens teilweise aus Gußeisen mit Kugelgraphit bestehen, soll eine Schweißmaterial-Legierung geschaffen werden, die sich zu Schweißstäben oder dergleichen verarbeiten läßt und welche das Schweißen unter Normalbedingungen ermöglicht. Dabei soll sich eine spanabhebende gut bearbeitbare Schweißnaht ergeben, die bei hoher Festigkeit eine ausreichend hohe Dehnung und Zähigkeit aufweist. Es wird eine Legierung auf Eisenbasis für die Verwendung beim autogenen und elektrischen Verbindungsschweißen von Werkstücken aus Gußeisen mit Kugelgraphit vorgeschlagen, die aus einem manganarmen, niedrig gekohlten Silizium-Stahl als Basismaterial besteht, dessen Mangangehalt auf <0,2 % und dessen Kohlenstoffgehalt auf <3,0 % eingestellt ist. Neben Silizium mit einem Anteil von 2,5 bis 3,2% ist ihm noch Kupfer bis zu 1,0 % sowie Molybdän bis zu 0,5 % zugegeben. Bevorzugt wird eine Legierung mit einem Mangangehalt <0,1% und einem Siliziumgehalt von 2,8 bis 2,9 %. Die Zieheigenschaften von Drahtmaterial können verbessert werden durch einen Aluminiumzusatz von 0,1 bis 2,0%.

EP 0 058 450 A1

Croydon Printing Company Ltd.

Dr. Horst Mühlberger, Staufenstraße 29
6000 Frankfurt

Legierung auf Eisenbasis für die Verwendung beim Verbindungsschweißen von Bauteilen aus Gußeisen mit Kugelgraphit

Die Erfindung betrifft eine Legierung auf Eisenbasis für
die Verwendung beim autogenen und elektrischen Verbindungsschweißen von Bauteilen aus Gußeisen mit Kugelgraphit.

Das Verbindungsschweißen von Werkstücken und Bauteilen,
die jeweils aus Gußeisen mit Kugelgraphit oder aber einerseits aus Gußeisen mit Kugelgraphit und andererseits aus
Stahl, wie Stahlguß oder Schmiedestahl bestehen, bereitet
insofern Schwierigkeiten, als sich der Kohlenstoff, welcher
im Gußeisen in Form von Graphit-Sphärolithen im Überschuß vorliegt, beim Aufschmelzen im Eisen löst und dann durch die
vergleichsweise rasche Abkühlung der Schweißnaht im allgemeinen zur Bildung von Zementit und damit zur Entstehung
harter Zonen in der Schweißnaht führt.

Abgesehen davon, daß eine solche Schweißnaht meistens nur
durch Schleifen bearbeitet werden kann, ergibt sich der beträchtliche Nachteil, daß die mechanischen Eigenschaften
im Verbindungsbereich zwischen den Werkstücken oder Bauteilen -
wenn überhaupt - nur in wenig sicherer Weise den Anforderungen
entsprechen, die in der Regel an eine Festigkeitsschweißung
gestellt werden.

Wie beispielsweise die DE-PS 11 84 186, die CH-PS 441 953 und
die AT-PS 263 479 deutlich machen, ist bereits vielfach versucht worden, Schweißmaterialien und Schweißverfahren zu
entwickeln, die die Zementitbildung im Bereich der Verbindungsschweißung unterbinden sollen. Es hat sich aber gezeigt, daß durch die Benutzung dieser bekannten Schweißmaterialien und Schweißverfahren der angestrebte Erfolg nur unter ganz bestimmten Voraussetzungen eintritt; d.h. das Verarbeiten der bekannten Schweißmaterialien und die Durchführung der ebenfalls bekannten Schweißverfahren ist nur unter Bedingungen möglich, die sich nicht ohne weiteres überall, und zwar insbesondere nicht an Baustellen, schaffen lassen. Im übrigen können die unter Einsatz der bekannten Schweißmaterialien und Schweißverfahren vorzunehmenden Verbindungsschweißungen nur von speziell geschultem Fachpersonal hergestellt werden.

Verbindungsschweißungen an Werkstücken und Bauteilen aus Gußeisen mit Kugelgraphit können nach dem Stand der Technik also unter den beim Schweißen sonst üblichen Normalbedingungen nicht als Festigkeitsschweißungen hergestellt werden.

Die Erfindung bezweckt die Beseitigung dieser Nachteile. Es ist ihr daher das Ziel gesetzt, eine Legierung auf Eisenbasis zu schaffen, die es unter für das normale Schweißen üblichen Schweißbedingungen ermöglicht, autogene und elektrische Verbindungsschweißungen an Bauteilen aus Gußeisen mit Kugel - graphit herzustellen.

Die Lösung dieser Aufgabe wird nach der Erfindung dadurch erreicht, daß die Legierung aus einem mangenarmen niedriggekohlten Silicium-Stahl als Basismaterial besteht, dessen Mangangehalt auf kleiner als 0,2% und dessen Kohlenstoff-gehalt auf kleiner als 2,0% eingestellt ist und dem neben einem Siliciumanteil von 2,5 bis 3,2% noch Kupfer bis zu einem Anteil von 1,0% sowie Molybdän in Anteilen bis zu 0,5% zugegeben ist.

Besonders hat es sich bewährt, wenn die Legierung einen Mangangehalt kleiner als 0,1% und einen Siliciumgehalt von 2,8 bis 2,9% aufweist.

Die als Schweißmaterial verwendbare Legierung hat damit eine solche chemische Zusammensetzung, daß sich der beim Schweißen im allgemeinen unvermeidbar lösende Kohlenstoff nicht unter Bildung von Zementit, sondern wiederum in Form von kugeligem Graphit bei der Abkühlung der Schweißnaht ausscheidet. Seine Zusammensetzung ist weiterhin so gewählt, daß sich auch bei sehr hoher Abkühlungsgeschwindigkeit der Schweißnaht, d.h. dann, wenn dem Kohlenstoff die notwendige Zeit zur Bildung von Graphitsphärolithen in der Schweißnaht nicht zur Verfügung stehen kann, Zementit nicht bildet, sondern zumindest vorübergehend in Anteilen Bainit entsteht. Eine Bainit enthaltende Schweißnaht ist nämlich, falls notwendig, spanabhebend gut bearbeitbar und besitzt trotz einer erhöhten Festigkeit eine noch immer ausreichend hohe Dehnung und Zähigkeit, wie sie für eine Festigkeitsschweißung erforderlich ist.

In der aus niedrig gekohltem Stahl geschaffenen Legierung ist einerseits der Siliciumgehalt so hoch und andererseits deren Mangangehalt so niedrig eingestellt, daß die Diffusionsgeschwindigkeit des Kohlenstoffes im flüssigen Metallzustand bei der Abkühlung der noch flüssigen Schweißnaht die größtmöglichen Werte erreicht, so daß die Bildung von Kugelgraphit erleichtert wird, Zementit folglich nicht entsteht, und dadurch die Eigenschaften der Schweißnaht nach der Abkühlung verbessert sind.

Die Herstellung eines derartigen manganarmen Siliciumstahles ist beispielsweise durch das Verblasen von Soreleisen möglich, wobei es nur notwendig ist, den Kohlenstoff durch die Blasbehandlung zu verbrennen. Ferner ist es möglich, einen manganarmen Siliciumstrahl dadurch zu schaffen, daß ein geeignetes Roheisen einer Oxygenbehandlung unterworfen wird, durch die nicht nur der Kohlenstoff, sondern auch der Mangangehalt aus dem Roheisen entfernt wird.

Nach der Entfernung von Mangan und Kohlenstoff wird dem Eisen Silicium durch Zugabe von Ferrosilicium zulegiert. Die Elemente Kupfer und Molybdän werden dem Eisen zugegeben, um bei der Abkühlung zunächst entweder eine Perlitbildung zu erreichen, oder bei sehr hohen Abkühlungsgeschwindigkeiten eine Bainitbildung sicherzustellen. Beide Gefügeausbildungen binden
Kohlenstoff und unterdrücken damit die Bildung des Zementit.

Dieses Ergebnis ist insofern überraschend, als Molybdän in der
Regel als Carbidbildner gilt. Der Molybdän- und Nickelzusatz
dient der Auslösung oder Begünstigung einer Bainitbildung, wenn
die Abkühlungsgeschwindigkeit so groß ist, daß an sich die Gefahr
der Zementitbildung besteht.

Der Bainit als Zwischengefüge aus nadelig ausgebildeten Ferritkristallen mit eingelagerten Carbiden - hat die Eigenschaft,
daß er entweder von selbst zerfällt, wenn die Schweißnaht abkühlt, oder aber durch Erwärmen auf verhältnismäßig niedrige
Temperatur zum Zerfall gebracht werden kann, wenn er stören sollte

Bei der Drahtherstellung kann der Siliciumanteil zu Schwierigkeiten beim Ziehen führen. Diesen kann man durch einen Zusatz
von 0,1 bis 2% vorzugsweise von 0,2 bis 0,3% Aluminium begegnen.
Es ist möglich, den Siliciumgehalt entsprechend zu verringern.

Der Schmelzpunkt der als Schweißmaterial dienenden Legierung
kann unter Berücksichtigung der an die Eigenschaften der
Schweißnaht gestellten Anforderungen durch einen mehr oder
weniger hohen Gehalt an Nickel innerhalb gewisser Grenzen verändert werden. Erfindungsgemäß ist es daher möglich, der Legierung
bis zu 30% Nickel zuzusetzen. Bereits mit einem Gehalt von nur
1 - 3% Nickel in der als Schweißmaterial dienenden Legierung kann
erfahrungsgemäß eine Schweißnaht auf einfache Weise mit den
verlangten Eigenschaften zuverlässig hergestellt werden, ohne
daß eine Wärmebehandlung nach dem Schweißen notwendig wird.

Erfindungsgemäß können der Legierung noch Magnesium und/oder
seltene Erden in einer für die Graphit-Sphörolithenbildung
ausreichenden Menge zugegeben werden.

Die Legierung läßt sich zu Stabmaterial für das autogene Schweißen und/oder zu Elektroden für das Elektroschweißen verarbeiten. Es läßt sich aus ihr aber auch Schweißdraht, beispielsweise durch Ziehen, herstellen, der zur Verwendung in Schweißautomaten geeignet ist.

Schließlich besteht ein wesentliches Erfindungsmerkmal noch darin, daß sich aus der Legierung Halbzeug, z.B. in Form von Bändern, Stäben oder dergleichen, vorfertigen läßt, welches sich vor dem Vergießen von Gußeisen mit Kugelgraphit in die Gießform zur Bildung des Werkstückes einsetzen läßt und einen schmelzflüssigen Verbund mit dem Gußeisen eingehen kann.

Ein solches Verbundgußstück aus Gußeisen mit Kugelgraphit und einem Legierungs-Halbzeug zeichnet sich in vorteilhafter Weise dadurch aus, daß das Halbzeug eine Dimensionierung hat, die einerseits beim Vergießen des Gußeisens mit Kugelgraphit einen metallischen Verbund zwischen dem Halbzeug und dem Gußwerkstück gewährleistet und andererseits ein Verschweißen des Gußstückes über den Halbzeugbereich mit normalen Stählen zuläßt.

Der besondere Vorteil bei der Verwendung der angegebenen Legierung als Schweißmaterial für Verbindungsschweißungen an Werkstücken bzw. Bauteilen aus Gußeisen mit Kugelgraphit liegt darin, daß sich auch Gußstücke verschiedener Herkunft, die vielfach eine unterschiedliche chemische Zusammensetzung haben, unter Normalbedingungen problemlos und sicher miteinander verschweißen lassen, und zwar auch von Personal, welches nicht besonders mit dem Schweißen von Gußeisen mit Kugelgraphit vertraut ist. Besondere Wärmebehandlungen der zu verbindenden Werkstücke bzw. Bauteile vor bzw. während der Durchführung der Verbindungsschweißung sind nämlich nicht notwendig und es muß auch nicht darauf geachtet werden, daß nach Fertigstellung der Verbindungsschweißung eine langsame Abkühlung der Schweißzone stattfindet.

6

0058450

Die Verarbeitung der Legierung als Schweißzusatzmaterial kann
in Form von vorgefertigten Stäben durch Autogenschweißen erfolgen. Sie ist aber auch in Form von Elektroden beim Elektroschweißen gleichermaßen benutzbar. Schließlich läßt es sich
auch zu Drähten verarbeiten, wie sie zum Betrieb von Schweißautomaten benötigt werden. Gegebenenfalls kann es sich auch
als zweckmäßig erweisen, die Legierung als pulverförmiges
Schweißzusatzmaterial zum Einsatz zu bringen.

Bei einer chemischen Zusammensetzung der Legierung, welche

| | | |
|---|---|---|
| Mangan | < 0,2 % | vorzugsweise < 0,1% |
| Kohlenstoff | < 2,0 % | vorzugsweise < 1,0% |
| Silicium | 2,5 bis 3,2 % | vorzugsweise 2,8 bis 2,9% |
| Kupfer | 0 bis 1,0 % | vorzugsweise 0,6 bis 0,8% |
| Molybdän | 0,1 bis 0,5 % | vorzugsweise 0,25 % und |
| Nickel | 0 bis 30% | vorzugsweise 1 bis 3 % |

enthält, sind an sich unerwünschte Legierungsbestandteile
von Chrom, Wolfram und Vanadin unschädlich, sofern sie Anteile
von je < 0,1% nicht überschreiten. Magnesium und/oder seltene
Erden sollte die Legierung in einer Konzentration enthalten,
die ausreicht, um eine Ausbildung des Graphits in die Sphärolithenform während und nach der Erstarrung der Schweißnaht sicherzustellen.

In dieser Legierung kommt dem Molybdän-Zusatz insofern besondere Bedeutung zu, als sich ergeben hat, daß er die Zementitbildung unterdrückt, obwohl Molybdän sich in der Regel als
Carbidbildner auswirkt. Innerhalb der angegebenen Legierungszusammensetzung wirkt es sich jedoch überraschenderweise nicht
als Carbidbildner aus, sondern führt, zusammen mit dem Kupfer-und
Nickelzusatz, zu einer Bildung von Bainit, das beim Schweißen
unter Normalbedingungen entweder von selbst zerfällt oder aber,
falls es in der Schweißnaht stören sollte, durch Erwärmen auf
400 - 500° C leicht zum Zerfall gebracht werden kann.

9. Februar 1981                    f.th                    0058450

Dr. Horst Mühlberger, Staufenstraße 29
6000 Frankfurt

— 1 —

Patentansprüche

1. Legierung auf Eisenbasis für die Verwendung beim autogenen und elektrischen Verbindungsschweißen von Werkstücken
   und Bauteilen aus Gußeisen mit Kugelgraphit,
   d a d u r c h   g e k e n n z e i c h n e t ,
   daß sie aus einem manganarmen, niedrig gekohlten Silicium-
   stahl als Basismaterial besteht, dessen Mangangehalt auf
   kleiner < 0,2 % und dessen Kohlenstoffgehalt auf < 2,0 %
   eingestellt ist und dem neben Silicium mit einem Anteil
   von 2,5 bis 3,2 % noch Kupfer bis zu einem Anteil von 1,0%
   sowie Molybdän in Anteilen bis zu 0,5% zugegeben ist.

2. Legierung nach Anspruch 1,
   d a d u r c h   g e k e n n z e i c h n e t ,
   daß sie einen Mangangehalt < 0,1% und einen Siliciumgehalt von 2,8 bis 2,9% aufweist.

3. Legierung nach den Ansprüchen 1 oder 2,
   d a d u r c h   g e k e n n z e i c h n e t ,
   daß ihr 0,1 bis 2%, vorzugsweise 0,2 bis 0,3% Aluminium zugesetzt ist.

4. Legierung nach mindestens einem der Ansprüche 1 bis 3,
   d a d u r c h   g e k e n n z e i c h n e t ,
   daß ihr bis zu 30% Nickel zugesetzt ist.

5. Legierung nach Anspruch 4,
   d a d u r c h     g e k e n n z e i c h n e t ,

daß ihr Nickel mit einem Anteil von 1 bis 3% zugesetzt ist.

6. Legierung nach mindestens einem der Ansprüche 1 bis 5,
   d a d u r c h   g e k e n n z e i c h n e t ,
   daß das Eisen eine für die Graphitsphärolithbildung
   ausreichende Menge an Magnesium und/oder seltenen Erden
   enthält.

7. Legierung nach mindestens einem der Ansprüche 1 bis 6,
   d a d u r c h   g e k e n n z e i c h n e t ,
   daß sie zu Stabmaterial für das autogene Schweißen und/oder
   zu Elektroden für das Elektroschweißen verarbeitet ist.

8. Legierung nach mindestens einem der Ansprüche 1 bis 6,
   d a d u r c h   g e k e n n z e i c h n e t ,
   daß sie zu Schweißdraht verarbeitet ist.

9. Legierung nach mindestens einem der Ansprüche 1 bis 6,
   d a d u r c h   g e k e n n z e i c h n e t ,
   daß sie zu Halbzeug, z.B. in Form von Bändern, Stäben
   oder dergleichen vorgefertigt ist, welche sich beim Vergießen von Gußeisen mit Kugelgraphit in der Gießform mit
   diesem verbindet.

10. Verbundgußstück aus Gußeisen mit Kugelgraphit und einem
    Halbzeug nach Anspruch 9 aus Werkstoff nach einem der
    Ansprüche 1 bis 6,
    d a d u r c h   g e k e n n z e i c h n e t ,
    daß das Halbzeug eine Dimensionierung (Wanddicke) hat, die
    einerseits beim Vergießen des Gußeisens mit Kugelgraphit
    einen metallischen Verbund des Halbzeuges mit dem Gußwerk-
    stoff gewährleistet und andererseits ein Verschweißen des
    Gußstückes über den Halbzeugbereich mit normalen Stählen
    zuläßt.

## 0058450

| Europäisches Patentamt | EUROPÄISCHER RECHERCHENBERICHT | | |

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-B-1 233 076 (YAWATA) <br> * Insgesamt * | 1,7,8 | B 23 K 35/30 // <br> C 22 C 38/02 |
| X | DE-B-1 243 499 (WESTFALISCHE UNION) <br> * Ansprüche 1,4 * | 1,4,5 | |
| X | FR-A- 607 402 (BOHLER) <br> * Insgesamt * | 1,3 | |
| X | FR-A-2 251 399 (PONT A MOUSSON) <br> * Ansprüche 2,3 * | 1,4,5 | |
| X | FR-A-2 390 240 (TEKSID) <br> * Ansprüche 1-3 * | 1,4,6 | |
| A | FR-A-1 239 069 (LINDE) <br> * Zusammenfassung * | 3 | RECHERCHIERTE SACHGEBIETE (Int. Cl. ³) |
| A | DE-C- 656 200 (R. SPOLDERS) | | B 23 K |
| A,D | DE-B-1 184 186 (INTERNATIONAL NICKEL) | | |
| A,D | CH-A- 441 953 (METALLGESELLSCHAFT) | | |

Der vorliegende Recherchenbericht wurde für alle Patentansprüche erstellt.

| Recherchenort | Abschlußdatum der Recherche | Prüfer |
|---|---|---|
| DEN HAAG | 11-05-1982 | MOLLET G.H.J. |

Europäisches
Patentamt

# EUROPÄISCHER RECHERCHENBERICHT

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A,D | AT-B- 263 479 (WESTFALISCHE UNION) | | |

-----

RECHERCHIERTE SACHGEBIETE (Int. Cl. 3)

Der vorliegende Recherchenbericht wurde für alle Patentansprüche erstellt.

| Recherchenort | Abschlußdatum der Recherche | Prüfer |
|---|---|---|
| DEN HAAG | 11-05-1982 | MOLLET G.H.J. |